# EUROPÄISCHE PATENTSCHRIFT

(11) **EP 3 124 154 B1**
(45) Veröffentlichungstag und Bekanntmachung des Hinweises auf die Patenterteilung: **09.10.2019**
(21) Anmeldenummer: 15179157.1
(22) Anmeldetag: 30.07.2015
(51) Int. Cl.: B23G 7/02, B23G 7/00

(54) **GEWINDEFORMER**
THREAD FORMER
DISPOSITIF DE FILETAGE

(43) Veröffentlichungstag der Anmeldung: 01.02.2017
(73) Patentinhaber: WALTER AG, 72072 Tübingen (DE)
(72) Erfinder: KUDERER, Daniel, 77736 Zell am Harmersbach (DE)
(74) Vertreter: Sandvik

(56) Entgegenhaltungen:
- EP-A1- 2 522 451
- EP-A2- 1 749 605
- DE-A1- 2 414 635
- DE-A1- 3 419 850
- DE-A1-102005 022 503
- DE-A1-102005 051 174
- DE-A1-102014 118 668
- FR-A- 975 103

## Beschreibung

Die vorliegende Erfindung bezieht sich auf einen Gewindeformer mit einem Schaft und einem Formungsabschnitt, gemäß dem Oberbegriff des Anspruchs 1. Ein solcher Gewindeformer ist aus dem Dokument EP1749605A2 bekannt.

Die DE 34 19 850 A1 beschreibt ein Gewindeschneidwerkzeug, welches unter anderem auch als "Gewindeglättteil" bezeichnete Gewindeformungsabschnitte aufweist. Dieses Werkzeug weist außerdem in seinem vorderen Teil Spannuten 6 auf, über welche geschnittene Späne abgeführt werden können. Die Spannut erfasst unterschiedlich breite Abschnitte der vorderen Gewindestege an im Wesentlichen dergleichen Winkelposition. Ein Kühlmittelzufuhr oder die Verwendung von Kühlmittel mit dem Werkzeug wird nicht beschrieben.

Die EP 1 749 605 A2 beschreibt ein Werkzeug und Verfahren zur Erzeugung und Nachbearbeitung eines Gewindes. Das Werkzeug ist für die Herstellung oder Nachbearbeitung von Gewinden vorgesehen, deren Durchmesser deutlich größer ist als der Durchmesser des Werkzeuges, so dass das Werkzeug zur Erzeugung des Gewindes seinerseits auf spiraligen Bahnen bewegt wird. In einigen Ausführungsformen eines solchen Gewindeformers sind auch axial oder spiralförmig verlaufende Nuten vorgesehen, durch welche Kühlmittel zugeführt werden kann. Wegen der Zirkularbewegung eines solchen Gewindeformers in einer größeren Gewindebohrung stellt die Zufuhr von Kühl- und Spülmittel kein besonderes Problem dar.

Auch die DE 10 2005 022 503 A1 beschreibt einen entsprechenden Zirkulargewindeformer, der teilweise spanabhebend und teilweise plastisch verformend arbeitet. Auch dieser weist spiralförmige Nuten für die Abfuhr von Spänen und die Zufuhr von Kühlmittel auf.

Gewindeformer der vorstehend genannten Art sind seit langem bekannt. Der Schaft eines solchen Gewindeformers definiert eine Achse und hat eine im Allgemeinen zylindrische Form oder ein entsprechendes Einspannende und einen an den Schaft anschließenden und entlang der Achse des Schaftes ausgerichteten Formungsabschnitt. Dieser Formungsabschnitt hat einen polygonalen Querschnitt, wobei der Begriff "polygonaler Querschnitt" eine Projektion des Formungsabschnittes auf eine Ebene senkrecht zur Achse des Schaftes und des Formungsabschnittes bezeichnet, und wobei die Ecken eines entsprechenden Polygons typischerweise abgerundet sind. Der polygonale Querschnitt wird letztlich definiert durch die radial äußeren Scheitel des oder der Stege des Formungsabschnittes, wobei dieser Scheitel des oder der Stege einen sich entlang eines Umlaufs um die Achse kontinuierlich radial verändernden Verlauf hat, d. h. der radial am weitesten nach außen vorspringende Scheitelpunkt eines Steges verändert seine Position entlang des Umfanges abwechselnd zwischen Maxima und Minima, wobei die Maxima die Polygonecken definieren und die Minima die radial am weitesten zurückgezogenen Bereiche bzw. Seiten des Polygonzuges definieren.

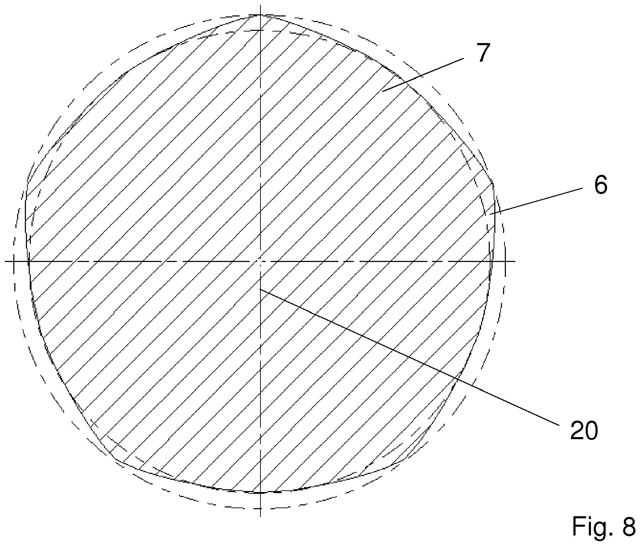

Entsprechende Gewindeformer haben typischerweise einen dreieckigen, viereckigen oder fünfeckigen Querschnitt, wobei der Querschnitt grundsätzlich aber auch mehr oder weniger Ecken aufweisen kann. Lediglich zur Veranschaulichung und ohne Beschränkungsabsicht wird auf den polygonalen Querschnitt hingewiesen, der beispielhaft für eine Ausführungsform in Figur 8 wiedergegeben ist. Der oder die Stege verlaufen zum Beispiel entlang einer Schraubenlinie um die Achse des Formungsabschnittes herum, wobei für mehrgängige Gewinde auch zwei oder mehr parallele, schraubenförmig umlaufende Stege vorgesehen sein können. Die Stege können aber auch in einer Ebene senkrecht zur Achse liegende ringförmig umlaufende Stege bzw. Rippen sein, wenn der Gewindeformer nach Art von Gewindefräsern seinerseits entlang einer Schraubenlinie axial und entlang der Innenwand eines Bohrloches bewegt wird, dessen Innenradius größer als der der maximale Außenradius des Formungsabschnittes ist.

Die vorliegende Erfindung bezieht sich auf alle vorgenannten Typen von Gewindeformern, wobei es von dem Material eines Werkstückes und vom Durchmesser der Gewindebohrung abhängt, ob und welcher Typ von Gewindeformer für den jeweiligen Fall einsetzbar ist. Für die Realisierung der vorliegenden Erfindung kommt es nur darauf an, dass mindestens zwei axial benachbarte Stegabschnitte vorhanden sind, die jeweils eine Unterbrechung aufweisen. In der Regel hat ein solcher Gewindeformer entweder einen oder mehrere kontinuierlich umlaufende Stege mit mindestens 5 bis 10 vollständigen Umläufen oder es ist eine entsprechende Anzahl paralleler, ringförmiger Stege vorgesehen. Auch die axial benachbarten Abschnitte eines einzelnen umlaufenden Steges werden hier als axial benachbarte "Stege" bezeichnet, soweit es nicht darauf ankommt, ob ein einzelner Steg kontinuierlich schraubenförmig umlaufend vorgesehen, oder ob mehrere parallele, schraubenförmig umlaufende Stege oder parallele, ebene ringförmige Stege vorgesehen sind.

Derartige Gewindeformer erzeugen in Bohrungen Innengewinde durch plastische Verformung des Materials der Innenwand der Bohrung. Die auf diese Weise erzeugten Innengewinde haben einen Innenradius, der mindestens dem Radius des Grundes der Nuten zwischen den Stegen des Gewindeformers entspricht und wobei der Außenradius (bzw. Nennradius) des Innengewindes dem maximalen Außenradius der Stege des Formungsabschnittes entspricht. Der maximale Radius der Stege und Nuten kann in axialer Richtung vom vorderen Ende des Gewindeformers zum Schaft hin zunehmen, um die erforderliche Verformungsarbeit auf die Stegabschnitte axial entlang des Formungsabschnittes besser zu verteilen.

Bei der plastischen Verformung des Materials, in welches ein entsprechendes Gewinde geformt wird, unter anderem auch abhängig von der Geschwindigkeit mit welcher die Gewindeformung stattfindet, entsteht (auch durch Reibung) in erheblichem Umfang Wärme, wobei die Erhitzung des Formungsabschnittes den Verschleiß beschleunigt oder bewirkt.

Um den Verschleiß des Formungsabschnittes, d. h. insbesondere der Stegabschnitte in den polygonalen Eckbereichen, zu reduzieren, weisen Formungsabschnitte einiger Gewindeformer nach dem Stand der Technik bereits Kühl- und Schmiermittelnuten auf, die sich axial über den Formungsabschnitt hinweg und typischerweise in einem Winkelabstand zu den Ecken des polygonalen Querschnittes erstrecken. Diese Kühl-/Schmiermittelnuten bilden effektiv Unterbrechungen der Stege oder Stegabschnitte des Formungsabschnittes.

Dadurch lässt sich bei gleicher Bearbeitungsdauer je Gewindebohrung der Verschleiß bereits erheblich reduzieren oder umgekehrt die Bearbeitungsgeschwindigkeit ohne nennenswerte Erhöhung des Verschleißes beträchtlich erhöhen.

Der vorliegenden Erfindung liegt gegenüber diesem Stand der Technik die Aufgabe zugrunde, einen Gewindeformer der eingangs genannten Art zu schaffen, bei welchem der Verschleiß noch weiter reduziert ist und die Bearbeitungsgeschwindigkeit oder die Zahl von hergestellten Gewindebohrungen ohne Vergrößerung des Verschleißes oder gar bei Reduzierung des Verschleißes noch weiter erhöht werden kann.

Diese Aufgabe wird dadurch gelöst, dass mindestens ein Teil der Unterbrechungen auf axial benachbarten Stegabschnitten an unterschiedlichen Winkelpositionen derart versetzt angeordnet ist, dass über den Schaft und die Unterbrechungen zugeführtes Kühl- und Schmiermittel entlang eines Zickzackweges durch die Unterbrechungen und entlang von Nutabschnitten zwischen den Formungsstegen zu einer axial nächstfolgenden Unterbrechung hindurchströmen muss.

Mit anderen Worten, die Unterbrechungen bilden keine axial durchgehende Nut, sondern sind erfindungsgemäss auf axial benachbarten Stegabschnitten in Umfangsrichtung versetzt zueinander angeordnet, so dass sich über den Schaft und die Unterbrechungen zugeführtes Kühl- und Schmiermittel entlang eines Zickzackweges durch die Unterbrechungen und entlang von Nutabschnitten zwischen den Formungsstegen zu einer axial nächstfolgenden Unterbrechung hindurchströmen muss, was dazu führt, dass durch den Versatz der Unterbrechungen mindestens ein Teil des Kühlmittels zwangsweise über die Eckbereiche des polygonalen Querschnittes geführt wird, die den Hauptteil der Verformungsarbeit leisten und die so besser gekühlt und geschmiert werden, so dass hierdurch der Verschleiß erheblich herabgesetzt werden kann und eine erheblich größere Zahl von Gewinden geformt werden kann, bevor ein Verschleiß auftritt, wie er bereits nach einer geringeren Zahl von hergestellten Gewinden mit herkömmlichen Gewindeformern erzeugt wird.

In jedem Fall sollte bei mindestens einem Teil benachbarter Stege entsprechende Unterbrechungen in Umfangsrichtung gegeneinander versetzt sein, damit das zugeführte Kühl- und Schmiermittel, welches über die Unterbrechungen zugeführt wird, zwischen zwei Unterbrechungen in Umfangsrichtung einer Nut zwischen den Stegabschnitten folgen muss und somit den durch die Verformungsarbeit am meisten belasteten Eckbereich des Formungsabschnittes besonders effektiv kühlt und schmiert.

Besonders effektiv ist diese Zwangsführung des Kühlmittels über einen Zickzack-Weg über die radial vorstehenden Formungsnocken hinweg bei der Herstellung von Gewinden in Grundlöchern, wenn die Zufuhr des Kühlmittels axial durch den Schaft und den Formungsabschnitt zu einer oder mehreren stirnseitigen Öffnungen am vorderen Ende des Gewindeformers erfolgt. Da das Kühlmittel nicht auf andere Weise aus dem Grundloch entweichen kann und unter Druck steht, muss es zwangsweise den Weg zwischen der Außenseite des Gewindeformers und dem teilweise oder ganz geformten Innengewinde in dem Grundloch nehmen, wobei die Folge der Unterbrechungen den Strömungsweg vorgibt, der notwendigerweise über die Formungsnocken des Gewindeformers führt und diese somit besonders effektiv kühlt und schmiert.

Auch bei der Herstellung von Gewinden in Durchgangsbohrungen kann die Effizienz der Kühlung und Schmierung durch eine axiale Zufuhr des Kühlmittel über den Schaft und den Formungsabschnitt auch weiterhin dadurch optimiert werden, dass die Austrittsöffnung(en) für das Kühlmittel nicht an der Stirnseite, sondern radial auf dem Formungsabschnitt liegt bzw. liegen. Als Ort für die Austrittsöffnungen bieten sich dabei eine oder mehrere der Unterbrechungen an, die dann über eine oder mehrere radiale Bohrungen mit dem oder den axialen Zufuhrkanal bzw. Zufuhrkanälen für das Kühlmittel zu verbinden wären. Wenn eine oder mehrere der radialen Austrittsöffnungen für das Kühlmittel insbesondere in der Nähe des vorderen Endes des Formungsabschnittes vorgesehen sind, kann eine solche Variante bei der Herstellung von Gewinden sowohl in Grundlöchern als auch in Durchgangsbohrungen eine sehr effektive Kühlung und Schmierung bewirken.

In einer bevorzugten Ausführungsform der Erfindung ist vorgesehen, dass die Winkelpositionen von Unterbrechungen in einem Winkelabstand von weniger als 40°, und vorzugsweise in einem Winkelabstand von weniger als 25°, beispielsweise um 20° oder 15 °, von den Eckbereichen des polygonalen Querschnittes beabstandet liegen.

Der Grund der Unterbrechungen sollte in einer Ausführungsform der Erfindung auf einem Radius des Formungsabschnitts liegen, der dem Radius am Grund eines Steges in der Mitte zwischen benachbarten Eckbereichen des polygonalen Querschnittes entspricht. Die Aussparungen können ggf. jedoch auch noch etwas tiefer sein, damit sie auf jeden Fall immer einen axialen Durchgang für Kühlmittel zwischen zwei benachbarten Nuten des Formungsabschnittes bereitstellen. Die Nähe der Unterbrechungen zu den polygonalen Eckbereichen stellt sicher, dass das Kühl- und Schmiermittel von den Unterbrechungen aus die am meisten belasteten Eckbereiche des Formungsabschnittes schnell erreicht.

Andererseits müssen die Unterbrechungen auch in einem hinreichenden Abstand zu den Eckbereichen vorgesehen sein da die Stege vor allem in den Eckbereichen die stärkste Verformungsarbeit leisten und den Grund und das endgültige Profil des zu formenden Innengewindes ausbilden.

In einer radialen Draufsicht auf den Formungsabschnitt sind gemäß einer Ausführungsform der Erfindung die Unterbrechungen in etwa kreisförmig.

Der maximale Durchmesser einer Unterbrechung kann in einer Ausführungsform der Erfindung zwischen etwa dem halben und dem zweifachen axialen Abstand axial benachbarter Stegabschnitte liegen. Die Aussparung kann also den Grund der Nuten beiderseits eines Steges auf gleicher radialer Höhe unmittelbar miteinander verbinden, wobei der Grund der Aussparung auch noch etwas tiefer (auf einem kleineren Radius bezüglich der Achse Gewindeformers) als der Grund der durch die Unterbrechung verbundenen Nuten liegen kann.

Gemäß einer Ausführungsform der Erfindung sind die Unterbrechungen in axialer Richtung gesehen auf jedem zweiten Steg an derselben Winkelposition angeordnet, wobei aber auch Variationen dieser Anordnung denkbar sind, so dass sich die Winkelposition von Unterbrechungen ggf. nur an jedem dritten oder vierten Steg wiederholt.

Gemäß einer anderen Ausführungsform ist je 360° Umfangsabschnitt eines Steges höchstens eine Unterbrechung vorgesehen (jedoch an einer anderen Winkelposition als die vorangehende Unterbrechung). Beispielsweise könnten die Unterbrechungen entlang eines schraubenförmig umlaufenden Steges jeweils um 432° gegenüber der nächstfolgenden oder der vorangehenden Unterbrechung versetzt sein. Dies zwingt das Kühl- und Schmiermittel dazu, bei seinem Weg durch die Unterbrechungen entlang sämtlicher Eckbereiche des polygonalen Querschnitts zu fließen, so dass zwangsweise eine Schmierung jedes Eckbereiches erfolgt.

Der polygonale Querschnitt des Formungsabschnittes hat gemäß einer Ausführungsform mindestens drei und höchstens sieben und insbesondere fünf Eckbereiche.

Die Differenz zwischen dem kleinsten Radius und dem größten Radius des polygonalen Querschnittes hat bei Ausführungsformen der Erfindung einen Betrag, der zwischen dem 0,5-fachen und dem 2-fachen der Steghöhe (Profiltiefe) im Eckbereich des polygonalen Querschnitts liegt.

Bevorzugt ist dabei jedoch eine Variante, bei der die maximale Differenz der Radien des Scheitels entlang eines (und vorzugsweise der meisten) 360° umfassenden Stegabschnittes auf jeden Fall kleiner ist als die Profiltiefe in den Eckbereichen des polygonalen Querschnitts. Hierdurch begrenzt man effektiv einen etwaigen Parallelstrom von Kühl- und Schmiermittel axial entlang der Winkelpositionen des kleinsten Radius der Scheitelpunkte.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren.

Es zeigen:
- Figur 1a-d: verschiedene Ansichten des Formungsabschnittes eines Gewindeformers gemäß einer Ausführungsform der vorliegenden Erfindung,
- Figur 2a-d: verschiedene Ansichten eines Gewindeformers nach dem Stand der Technik ohne Unterbrechungen der Stege,
- Figur 3a-d: verschiedene Ansichten eines Gewindeformers nach dem Stand der Technik mit Unterbrechungen der Stege, die an benachbarten Stegen bzw. Umläufen axial in einer Reihe hintereinander angeordnet sind,
- Figur 4a-d: verschiedene Ansichten einer zweiten Ausführungsform der vorliegenden Erfindung,
- Figur 5a-d: verschiedene Ansichten einer dritten Ausführungsform der vorliegenden Erfindung
- Figur 6a-d: verschiedene Ansichten einer vierten Ausführungsform der vorliegenden Erfindung,
- Figur 7a-d: eine Übersicht über vier verschiedene Ausführungsformen der Erfindung,
- Figur 8: das Profil des Formungsabschnitts einer Ausführungsform der vorliegenden Erfindung, und
- Figuren 9A-9E: Verschleißtestfotos von Werkzeugen nach dem Stand der Technik (9A-9C) und gemäß der vorliegenden Erfindung (9D und 9E).

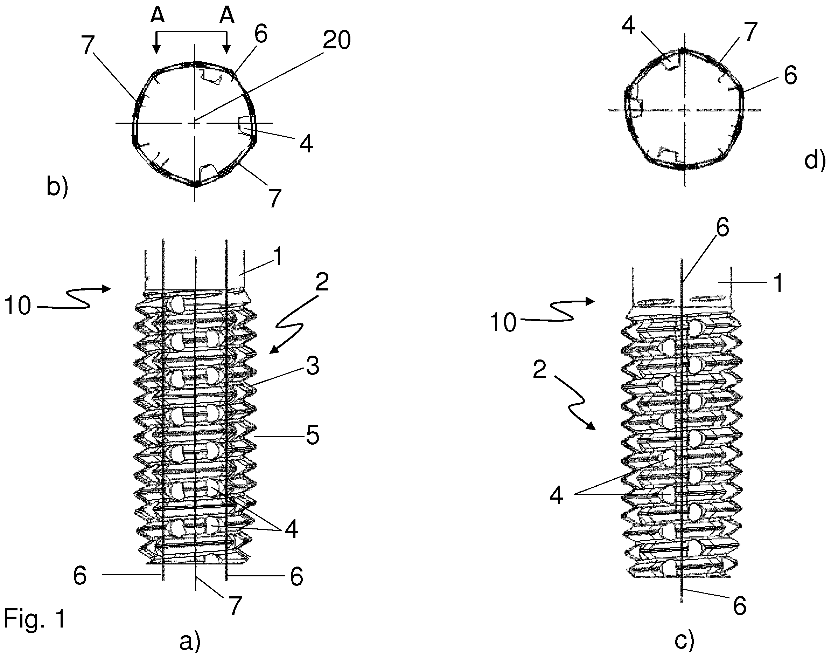

Figur 1 zeigt verschiedene Ansichten einer ersten Ausführungsform der vorliegenden Erfindung, wobei die Figuren 1a und 1c Seitenansichten aus verschiedenen Blickwinkeln darstellen und die Figuren 1b bzw. 1d entsprechende stirnseitige Ansichten zeigen, entsprechend einer Ansicht auf die Figuren 1a bzw. 1c von unten. Figuren 1a bzw. 1c entsprechen Ansichten auf die Formungsabschnitte 2 in Figuren 1c bzw. 1d jeweils von oben. Dies gilt analog für alle Seitenansichten und stirnseitigen Ansichten in den Figuren 1 - 6.

Man erkennt in Figur 1 den wesentlichen Teil eines Gewindeformers 10 mit einem Abschnitt des Schaftes 1 und einem an den Schaft 1 axial anschließenden Formungsabschnitt 2, der alternativ mehrere parallele, ringförmig umlaufende Stege haben könnte, hier jedoch einen schraubenförmig umlaufenden Steg 3 aufweist, mit Hilfe dessen in dem dargestellten Ausführungsbeispiel ein Innengewinde in einer entsprechenden Bohrung hergestellt werden kann.

In Figur 1a, entsprechend der Draufsicht auf Figur 1b von oben, liegt im Zentrum der Figur 1a eine durch eine vertikale Linie 7 markierte, radial am weitesten zurückgezogene Position des fünfeckigen Querschnitts. In Figur 1c ist derselbe Gewindeformer dargestellt, wobei jedoch ein ebenfalls durch eine vertikale Linie 6 markierter Eckbereich im Zentrum der Figur liegt. Man erkennt durch Vergleich zwischen den Figuren 1a und 1c, dass die Aussparungen 4 etwas näher an den Eckbereichen 6 als an den zurückgezogenen Positionen 7 liegen, die sich in der Mitte zwischen benachbarten Ecken bzw. Eckbereichen 6 befinden.

Des Weiteren haben die ersten drei Stege 3 am unteren bzw. vorderen Ende des Formungsabschnittes 2 einen kleineren und von unten nach oben zunehmenden Radius, bezogen auf die zentrale Achse 20, um die Belastung bei der Gewindeformung gleichmäßiger über die Länge des Formungsabschnittes hinweg zu verteilen.

In einer axialen Projektion des Formungsabschnitts 2 gemäß Figur 8 erkennt man, dass die Projektion der Scheitellinie des Steges auf eine Ebene senkrecht zur Achse 20 des Werkzeuges ein regelmäßiges Fünfeck mit abgerundeten Ecken 6 und radial am weitesten zurückgezogenen Abschnitten 7 definiert. Gestrichelte Linien deuten dabei den minimalen und den maximalen Abstand des Formungssteges 3 von der Achse 20 an, Der Innenradius des herzustellenden Innengewindes kann kleiner sein als der Radius des in das Profil in Figur 8 einbeschriebenen Kreises, während der äußere, das Profil umfassende Kreis in etwa dem Nenndurchmesser des Innengewindes entspricht oder geringfügig größer ist. Entlang des Umfanges des Formungsabschnittes 2 finden sich fünf Eckpositionen in Winkelabständen von jeweils 72°, welche die Lage der fünf Ecken 6 definieren, und fünf zurückgezogene Positionen 7, die jeweils die Seitenmitten des Fünfecks repräsentieren.

Es versteht sich, dass das dargestellte Fünfeckprofil nur ein Beispiel ist und entsprechende Gewindeformer auch ein elliptisches (abgerundet "zweieckiges") dreieckiges oder auch sonstiges polygonales (n-eckiges mit n beispielsweise zwischen 4 und 10) Profil haben könnten, das im Übrigen auch nicht zwingend axialsymmetrisch sein muss, auch wenn letzteres bevorzugt ist. Axialsymmetrie bedeutet in diesem Zusammenhang, dass in der stirnseitigen Draufsicht (entsprechend beispielsweise Figur 1b und 1d) die Kontur des Formungsabschnittes nach Drehung um einen festen Winkel, der den Wert 360/n hat, wenn n die Anzahl der Ecken 6 des Profils ist, wieder in sich selbst übergeht.

In Figur 1a ist die Lage zweier Ecken 6 durch vertikale schwarze Linien wiedergegeben. Der Formungssteg 3 ist im Fall der Figur 1 ein einzelner, durchgehender Gewindegang, wobei die radial am weitesten vorstehenden Eckbereiche 6 über die axiale Länge des Formungsabschnittes 2 hinweg jeweils an denselben Winkelpositionen vorgesehen sind.

Bei der Ausführungsform nach Figur 1 erkennt man auf jedem Stegumlauf bzw. jedem der axial nebeneinander liegenden Stegabschnitte 3 abwechselnd rechts und links von der Ecke 6 jeweils eine Unterbrechung 4 , wobei die Unterbrechungen auf axial benachbarten Abschnitten des Steges gegenüber der Ecke 6 abwechselnd in Umfangsrichtung vor- und zurückversetzt sind. Im vorliegenden Ausführungsbeispiel hat der Steg eine Aussparung 4, die der Ecke in Rotationsrichtung um beispielsweise 15° voraneilt, während auf dem nächsten Stegumlauf bzw. dem axial benachbarten Stegabschnitt die entsprechende Aussparung 4 der Ecke um ca. 15° nacheilt.

Die Zufuhr eines Schmiermittels erfolgt axial über eine (nicht dargestellte) zentrale Bohrung im Schaft 1 und im Formungsabschnitt 2, wobei dieser Gewindeformer für Sacklochbohrungen vorgesehen ist und das auf den Grund der Sacklochbohrung auftreffende Kühl- und Schmiermittel über die Außenseite des Formungsabschnittes 2 und damit durch die Aussparungen 4 und Nuten 5 zurückströmt und damit auch die Eckbereiche 6 des Formungsabschnittes 2 schmiert und kühlt.

Im Falle von Durchgangsbohrungen könnte man stattdessen das Schmiermittel von außen auf den Formungsabschnitt 2 und/oder den Schaft 1 aufsprühen. Alternativ kann man im Falle von Durchgangsbohrungen auch eine interne Kühlmittelzufuhr verwenden, bei welcher jedoch der axial durch den Schaft 1 verlaufende und sich in den Formungsabschnitt 2 hinein erstreckende Zufuhrkanal bzw. entsprechende axiale Bohrung(en) nicht an der vorderen Stirnseite mündet, sondern wie oben bereits beschrieben über mindestens eine weitere radiale Bohrung im Formungsabschnitt mündet, vorzugsweise im Bereich einer oder mehrerer Unterbrechungen, insbesondere an den vorderen Stegen in der Nähe des vorderen Endes des Formungsabschnittes und gegebenenfalls auch über die Länge des Formungsabschnittes verteilt.

In einem Bohrloch, in welchem das Gewinde hergestellt wird, verhindern die Stege 3 bzw. die einzelnen Windungen oder Abschnitte dieses Steges 3 das direkte axiale Vorbeiströmen eines Kühl- und/oder Schmiermittels an den Ecken 6. Durch das Innere des Schaftes 1 und den Formungsabschnitt 2 oder von außen axial zugeführtes Kühl-/Schmiermittel wird innerhalb der Gewindebohrung bevorzugt durch die entsprechenden Aussparungen 4 in axialer Richtung durch einen Steg hindurchtreten, muss dann über die Ecke 6 hinweg entlang eines Gewindegrundes fließen und kann erst danach auf der anderen Seite der Ecke 6 durch die nächste Aussparung 4 axial weiterfließen. Das zugeführte Fluid folgt demnach einem Zickzackpfad durch die Aussparungen 4 und die dazwischenliegenden Nuten zwischen den Stegen bzw. Stegumläufen, wobei es in den Nuten zwischen den Aussparungen jeweils über den Eckbereich 6 hinwegfließt. Dies führt zu einer sehr effektiven Kühlung und Schmierung des Steges 3 bzw. der einzelnen Stegabschnitte und verringert so den Verschleiß an den Formungsabschnitten 2.

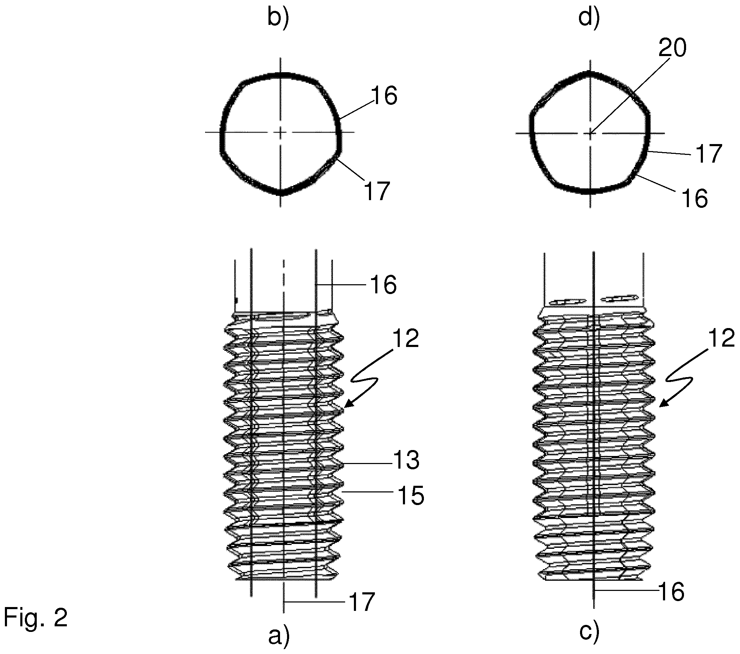

Figuren 2a-d zeigen zum Vergleich einen herkömmlichen Gewindeformer in Ansichten analog zu Figur 1a-d, wobei die verwendeten Bezugszahlen für analoge Elemente im Vergleich zu Figur 1 jeweils eine vorangestellte "1" haben. Dieser Gewindeformer hat einen Schaft 11 und einen Formungsabschnitt 12, wobei der Scheitel der Stege 13 in der axialen Projektion ebenfalls ein regelmäßiges Polygon, insbesondere ein Fünfeck, bildet.

Die Kühl- und Schmiermittelzufuhr von außen ist bei Verwendung eines solchen Werkzeuges relativ schwierig, da Kühl- bzw. Schmiermittel, welches die vorderen Gewindegänge erreichen soll, zunächst entlang des Umfanges des Formungsabschnittes durch die Gewindenuten 15 zwischen den Stegen 13 hindurchströmen muss, die aber durch das Wandmaterial des Bohrlochs weitgehend blockiert sind.

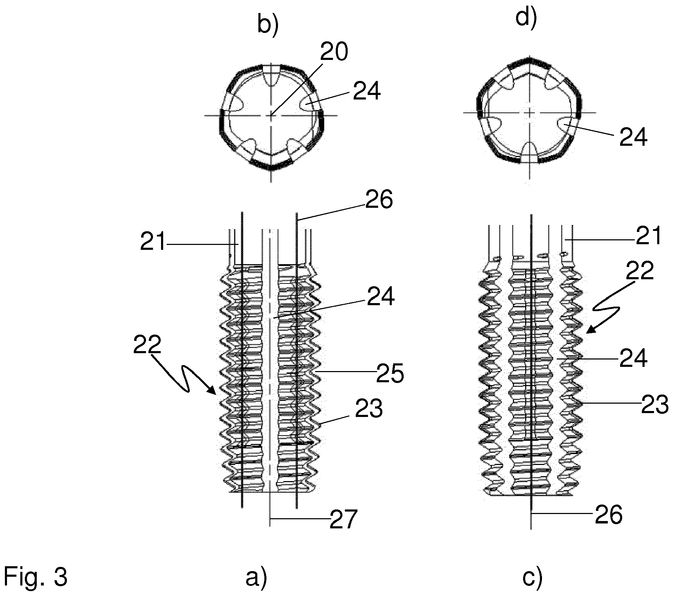

Figuren 3a-d zeigen verschiedene Ansichten eines weiteren Gewindeformers nach dem Stand der Technik, wobei die verwendeten Bezugszahlen für analoge Elemente im Vergleich zu Figur 1 jeweils eine vorangestellte "2" haben. Dieser Gewindeformer hat einen Schaft 21 und einen Formungsabschnitt 22, wobei die Aussparungen an den einzelnen Stegumläufen 23 in diesem Fall jeweils axial hintereinander ausgerichtet sind und so axial durchgehende Kühl- und Schmiermittel-Nuten 24 bilden. Bei diesem Stand der Technik ist zur besseren Kühlung und Schmierung ein (nicht dargestellter) zentraler Zufuhrkanal im Inneren des Schaftes 1 und des Formungsabschnittes 2 vorgesehen, der an der freien Stirnseite des Formungsabschnittes mündet und für Grundlöcher verwendet wird. Das Kühlmittel muss dann axial auf der Außenseite des Formungsabschnittes zurückfließen. Zu diesem Zweck ist eine sogenannte Entlastungs- oder Entlüftungsnut 24 vorgesehen, deren Grund noch radial innerhalb des Grundes der Gewindeformnuten 25 zwischen den Stegen oder Stegabschnitten 23, liegt, wobei das Kühl- und Schmiermittel axial sehr schnell durch die axialen Nuten 24 hindurchströmen und vergleichsweise wenig auf den zwischen den Nuten 24 liegenden polygonalen Eckbereich 26 einwirken kann.

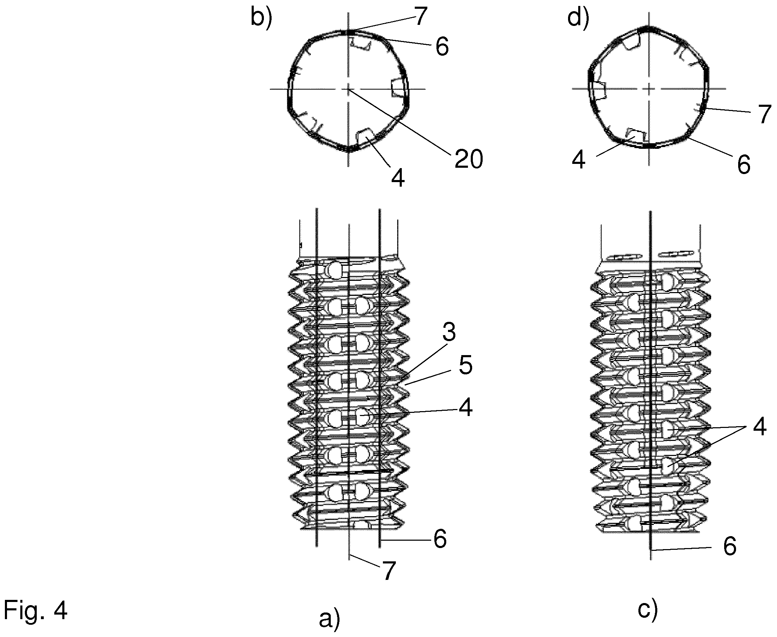

Figuren 4a-d zeigen verschiedene Ansichten einer zweiten Ausführungsform der vorliegenden Erfindung analog zu den Ansichten in Figur 1a-d, wobei die zweite Ausführungsform derjenigen nach Figur 1 sehr ähnlich ist mit dem einzigen Unterschied, dass der Winkelabstand der Aussparungen 4 zu der nächstliegenden Polygonecke 6 bei etwa 20° liegt.

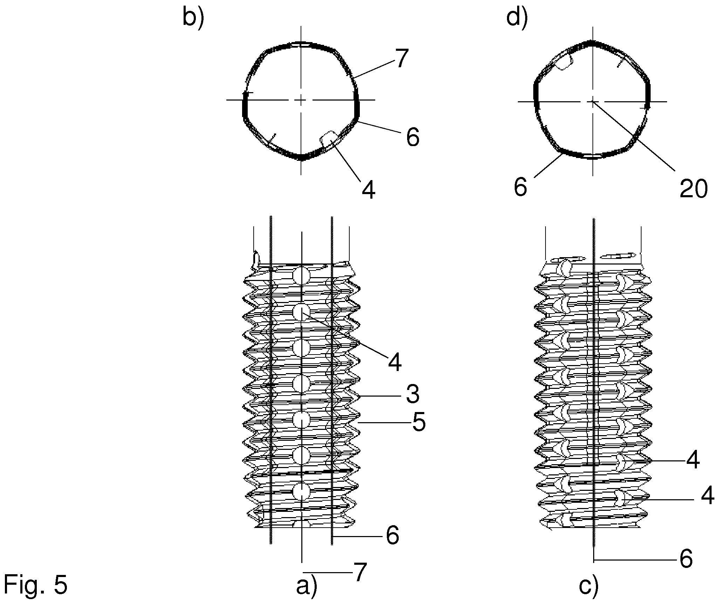

Im Falle des dritten Ausführungsbeispiels nach den Figuren 5a-d liegen die Aussparungen 4 bezüglich der Polygonecke 6 auf jedem zweiten Stegumlauf jeweils bei ±36°, d.h. gerade am tiefsten Punkt 7 des Stegscheitels der zwei benachbarten Ecken des zu Grunde liegenden Polygons. In allen Bereichen 7 in der Mitte zwischen benachbarten Ecken 6 sind also Aussparungen an derselben axialen Position auf jedem zweiten Stegumlauf vorgesehen.

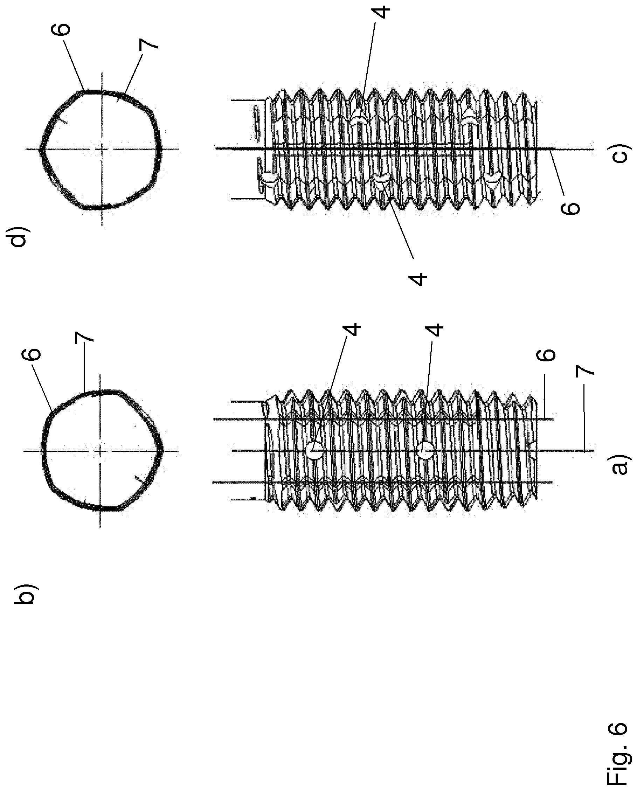

Figur 6 zeigt wiederum Ansichten einer vierten Ausführungsform der vorliegenden Erfindung, wobei die beiden Seitenansichten gemäß Figur 6a und Figur 6c relativ zueinander bezüglich der Achse 20 um 36° verdreht sind, wie man auch an den Querschnittsansichten der Figuren 6b und 6d erkennt, welche Ansichten auf die Figuren 6a und 6c von unten sind.

In diesem Fall ist hinter einer Aussparung 4 in Verlaufe des Gewindes (in beiden Richtungen gesehen) die nächste Aussparung erst nach 432° Gewindestegumlauf vorgesehen, was in der Seitenansicht gemäß Figur 6a und 6c einen Versatz um 72° und auf den jeweils folgenden Steg bedeutet. Ausgehend von einer Aussparung 4 in einem Stegabschnitt 3 nahe des Schaftes 1 ist also die nächstfolgende Aussparung auf dem zum vorderen Ende des Gewindeformers hin nächstfolgenden Stegumlauf um 72° versetzt angeordnet, so dass sich nach fünf Stegumläufen die Umfangsposition für jede Aussparung 4 wiederholt.

Dies bedeutet, dass ein Kühlmittel, welches von unten nach oben (oder auch von oben nach unten) den Formungsabschnitt passiert, nach dem Hindurchtreten durch eine der Aussparungen 4 über einen Umfangsabschnitt von 72° hinweg, der auch einen Eckbereich 6 einschließt, bis zur nächsten Aussparung 4 fließen muss, wo es wiederum axial in die nächstfolgende Gewindenut 5 eintreten kann und wiederum über einen Umfangsabschnitt von 72° und über einen Eckbereich 6 hinwegfließen muss, bevor es zur nächsten Aussparung 4 gelangt.

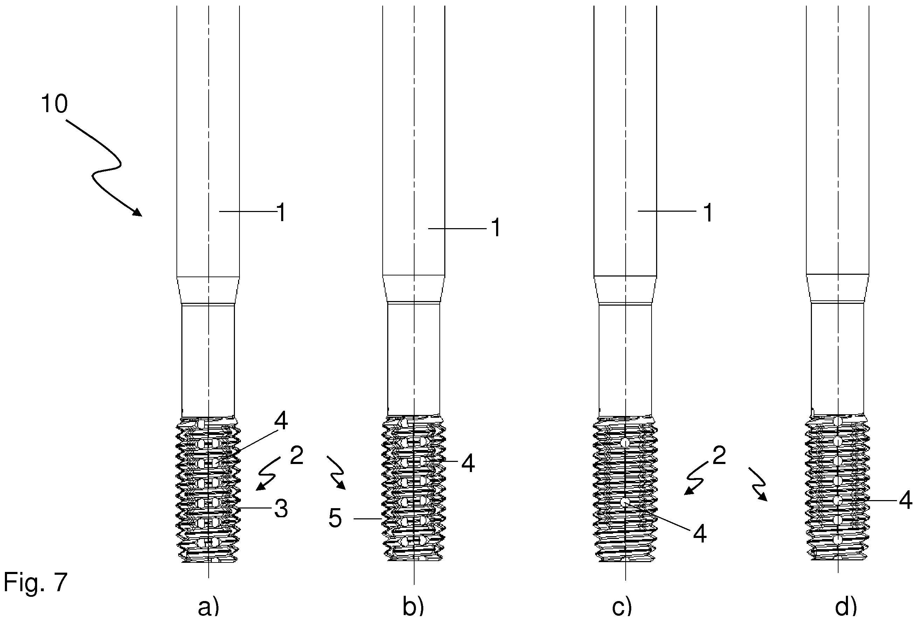

Figur 7 a-d zeigt nochmals vollständigere Bilder der Ausführungsformen nach den Figuren 1, 4, 6 und 5 in dieser Reihenfolge, wobei jeweils ein etwas größerer Abschnitt des in den übrigen Figuren nicht erkennbaren Schaftes 1 wiedergegeben ist.

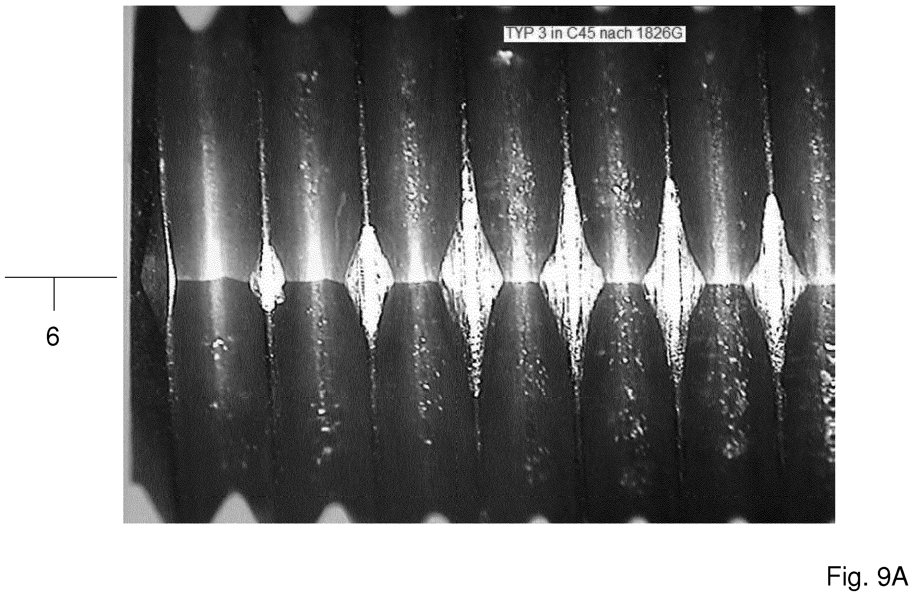

Die Figuren 9A-E zeigen die Ergebnisse von Vergleichstests zwischen 3 Gewindeformern nach dem Stand der Technik und zwei Gewindeformern gemäß der vorliegenden Erfindung.

Alle Gewindeformer der Figuren 9A - E wurden unter denselben Bedingungen und an derselben Maschine getestet. Die Gewindeformer wurden jeweils für die Herstellung an einer Anzahl von Gewinden derselben Maße und in demselben Material verwendet, bis der in den Figuren 9A -E jeweils wiedergegeben Verschleißgrad erreicht wurde. Die Anzahl der bis zu diesem Verschleißgrad jeweils hergestellten Gewinde ist in Tabelle 1 wiedergegeben.

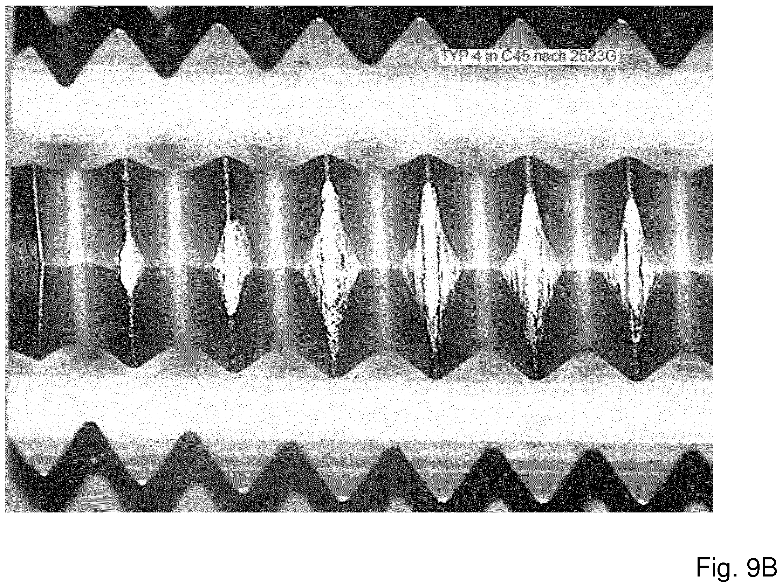

Dabei zeigt Figur 9A den Verschleiß eines Gewindeformers ohne Schmiermittelnuten gemäß Figur 2, wobei das Kühl- und Schmiermittel extern zugeführt, d. h. auf den zugänglichen Bereich des Formungsabschnittes 2 außerhalb der Gewindebohrung von außen aufgesprüht wurde. Der Kühlmittelstrahl wurde also direkt (z. B. schräg von hinten) auf den unteren Abschnitt des Schaftes 1 und den angrenzenden Formungsabschnitt 2 gerichtet. Der Verschleiß tritt vor allem an den polygonalen Eckbereichen 6 auf, wobei die Lage dieses Eckbereiches 6 in Figur 9A zusätzlich markiert ist, der auch in allen anderen Figuren 9B - 9E entlang der entsprechenden zentralen Achse 6 der Fotos verläuft.

Figur 9B zeigt den Verschleiß bei einem Gewindeformer gemäß Figur 3, wobei die Kühl- und Schmiermittelzufuhr in gleicher Weise wie zuvor beschrieben von außen erfolgte.

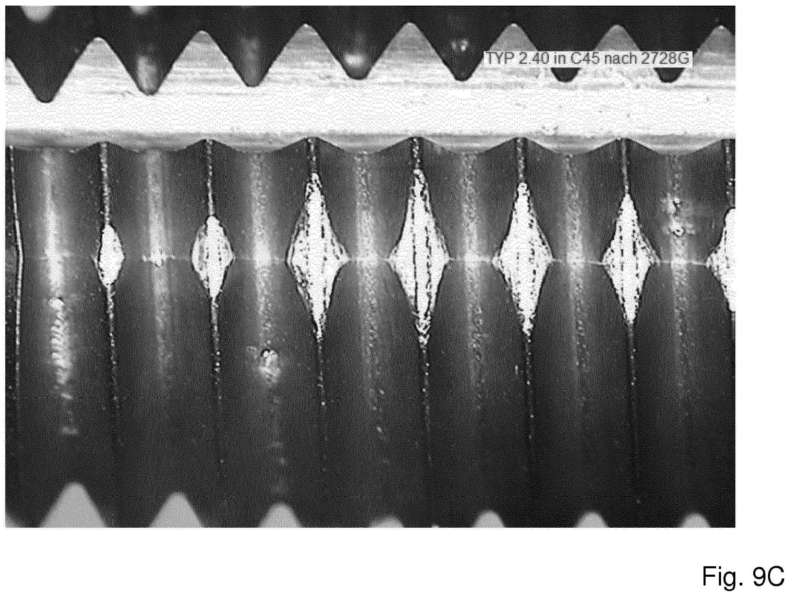

Figur 9C zeigt den Verschleiß an einem Werkzeug nach dem Stand der Technik ähnlich der Ausführungsform nach Figur 3, jedoch mit interner Kühl-Schmiermittelzufuhr, d.h. das Schmiermittel wird durch einen axial sich durch das gesamte Werkzeug hindurch erstreckenden Kanal bis an das vordere Ende zugeführt, wo es auf den Grund einer Sacklochbohrung trifft, wobei das KühlSchmiermittel anschließend über die Schmiermittelnut 24 zurückgeführt wird, so dass der am stärksten durch Verformungsarbeit belastete vordere Abschnitt stärker gekühlt wird.

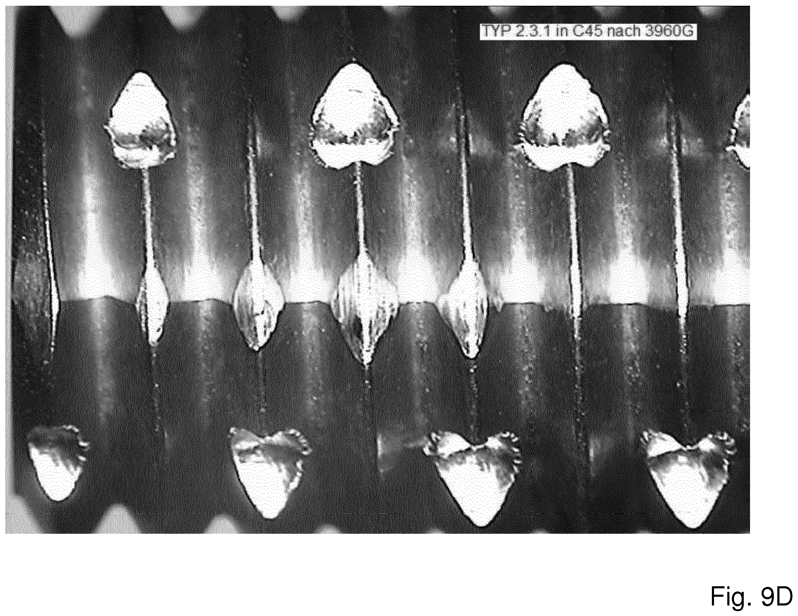

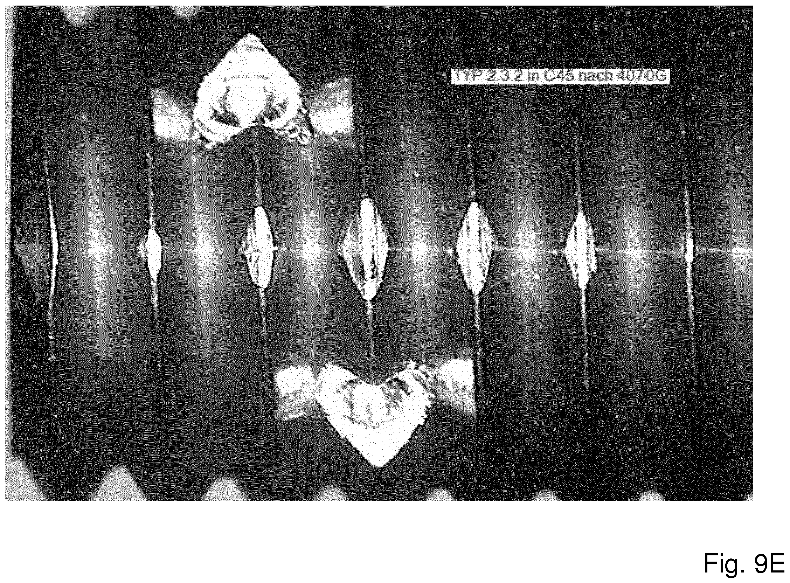

Die Figuren 9D und 9E zeigen den Verschleiß bei zwei Gewindeformern gemäß der Erfindung, wobei Figur 9D die Ergebnisse zu einem Gewindeformer entsprechend Figur 4 zeigt, bei welchem die Unterbrechungen auf axial benachbarten Gewindegängen abwechselnd um 20° vor- bzw. zurückversetzt waren, während im Falle des Werkzeuges gemäß Figur 9E die Unterbrechungen am tiefsten Punkt zwischen den polygonalen Eckbereichen angeordnet waren (entsprechend Figur 6), und zwar auf axial aufeinander folgenden Gewindestegen jeweils um 72° in die gleiche Richtung versetzt oder, anders ausgedrückt, dem Verlauf des Gewindeganges folgend jeweils nach 432°, so dass sich das Muster der Unterbrechungen bzw. die Winkelposition der Unterbrechungen jeweils nach fünf Gewindegängen (5 axial aufeinander folgenden Gewindestegen) wiederholte.

Die Testergebnisse sind in der nachstehenden Tabelle 1 zusammengefasst.

| Gewindeformer | KSS intern | KSS extern | Schmiernut | Bemerkung | Ergebnis |
|---|---|---|---|---|---|
| A | | X | Ohne | Stand der Technik | 1862 |
| B | | X | Ja | Stand der Technik | 2523 |
| C | X | | 1 Entl.nut | Stand der Technik | 2728 |
| D | X | | Unterbrochen | Gemäß Erfindung | 3960 |
| E | X | | Unterbrochen | Gemäß Erfindung | 4053 |

Die Gewindeformer A bis E der vorstehenden Tabelle sind die in den Figuren 9A -E gezeigten Werkzeuge. Der Gewindeformer B hatte eine Anzahl von axial durchgehend verlaufenden Schmiermittelnuten 24, die der Anzahl (=5) der Formungsnocken entsprach, wobei die Kühlmittelzufuhr von außen erfolgte.

Der Gewindeformer C (entsprechend Figur 3) war für die Gewindeherstellung in Grundlöchern vorgesehen und hatte eine interne Kühlmittelzufuhr zur Werkzeugspitze hin, wobei die (in diesem Fall einzige) Nut 24, die demzufolge von vorn nach hinten durchströmt wurde, vor allem dazu dient, einen übermäßigen Druckanstieg in dem Grundloch zu vermeiden und die deshalb als "Entlüftungsnut" oder "Entlastungsnut" bezeichnet wird,
Die letzte Spalte der Tabelle gibt die Anzahl der Gewinde wieder, die bis zu dem in den Figuren 9A - E gezeigten Verschleißgrad mit dem jeweiligen Gewindeformer hergestellt wurden.

Wegen der internen Schmiermittelzufuhr, die in gleicher Weise auch bei den erfindungsgemäßen Gewindeformern D und E vorgesehen ist, ist der Gewindeformer C noch am ehesten mit den Gewindeformern D und E gemäß der vorliegenden Erfindung vergleichbar.

Man erkennt gegenüber dem Stand der Technik eine deutliche Verbesserung der Standzeit und der Anzahl der bis zu einem gegebenen Verschleiß hergestellten Gewinde.

Selbst gegenüber dem besten Vergleichswerkzeug C ist eine Steigerung um ca. 45 bis 48 % in der Zahl der hergestellten Gewinde festzustellen.

### Bezugszeichenliste

- 1, 11, 21: Schaft
- 2, 12, 22: Formungsabschnitt
- 3, 13, 23: Steg
- 4/24: Aussparung, Unterbrechung / Nut
- 5, 15, 25: Nut / Gewindenut
- 6, 16, 26: Ecke, Eckbereich
- 7, 17, 27: eingezogener Bereich, Mitte zwischen benachbarten Ecken
- 10: Gewindeformer
- 20: Achse

## Patentansprüche

1. Gewindeformer (10) mit einem Schaft (1) und einem Formungsabschnitt (2), der einen polygonalen Querschnitt hat, wobei sich ein Steg (3) oder mehrere Stege (3) des Gewindeformers entlang des Umfanges des Formungsabschnittes (2) derart erstrecken, dass der Formungsabschnitt (2) mindestens zwei axial benachbarte Stege (3) bzw. Stegabschnitte aufweist, die jeweils mindestens eine Unterbrechung (4) aufweisen **dadurch gekennzeichnet, dass** mindestens ein Teil der Unterbrechungen (4) auf axial benachbarten Stegabschnitten an unterschiedlichen Winkelpositionen derart versetzt angeordnet ist, dass, wenn über den Schaft und die Unterbrechungen Kühl- und Schmiermittel zugeführt wird, das Kühl- und Schmiermittel entlang eines Zickzackweges durch die Unterbrechungen und entlang von Nuten abschnitten zwischen den Formungsstegen zu einer axial nächstfolgenden Unterbrechung hindurchströmen muss.

2. Gewindeformer (10) nach Anspruch 1, **dadurch gekennzeichnet, dass** der Steg (3) oder die Stegabschnitte sich einschließlich der Unterbrechungen (4) insgesamt über mehr als 3 mal, vorzugsweis über mehr als 4 mal 360° erstrecken.

3. Gewindeformer (10) nach einem der vorstehenden Ansprüche, **dadurch gekennzeichnet, dass** die Unterbrechungen auf jedem sich über 360° in Umfangsrichtung erstreckenden Stegabschnitt in engem Winkelabstand neben mindestens einer Ecke (6) des polygonalen Querschnitts vorgesehen sind.

4. Gewindeformer (10) nach einem der vorstehenden Ansprüche, **dadurch gekennzeichnet, dass** die Winkelpositionen von Unterbrechungen (4) in einem Winkelabstand von weniger als 40° vorzugsweise weniger als 25° von den Eckbereichen des polygonalen Querschnitts liegen.

5. Gewindeformer (10) nach einem der vorstehenden Ansprüche, **dadurch gekennzeichnet, dass** ein schraubenförmig umlaufender Steg (3) oder mehrere parallele schraubenförmig umlaufende Stege an dem Formungsabschnitt vorgesehen sind.

6. Gewindeformer (10) nach einem der vorstehenden Ansprüche, **dadurch gekennzeichnet, dass** mehrere kreisringförmige Stege (3) in gleichmäßigen axialen Abständen an dem Formungsabschnitt (2) vorgesehen sind.

7. Gewindeformer (10) nach einem der vorstehenden Ansprüche, **dadurch gekennzeichnet, dass** der Grund der Unterbrechungen (4) auf einem Radius des Formungsabschnitts (2) liegt, der dem Radius eines Steges (3) in der Mitte zwischen benachbarten Ecken (6) des polygonalen Querschnitts entspricht.

8. Gewindeformer (10) nach einem der vorstehenden Ansprüche, **dadurch gekennzeichnet, dass** die Unterbrechungen (4) in einer radialen Draufsicht auf den Formungsabschnitt (2) in etwa kreisförmig sind

9. Gewindeformer (10) nach einem der vorstehenden Ansprüche, **dadurch gekennzeichnet, dass** der maximale Durchmesser einer Unterbrechung (4) zwischen etwa der Hälfte und dem Zweifachen des axialen Abstandes axial benachbarter Stegabschnitte liegt.

10. Gewindeformer (10) nach einem der vorstehenden Ansprüche, **dadurch gekennzeichnet, dass** die Unterbrechungen (4) in axialer Richtung gesehen auf jedem zweiten oder auf jedem dritten Steg an derselben Winkelposition angeordnet sind.

11. Gewindeformer (10) nach einem der vorstehenden Ansprüche, **dadurch gekennzeichnet, dass** die Unterbrechungen (4) in axialer Richtung gesehen auf jedem n'ten Steg an derselben Winkelposition angeordnet sind, wobei n die Anzahl der Ecken des polygonalen Querschnitts ist.

12. Gewindeformer (10) nach einem der vorstehenden Ansprüche, **dadurch gekennzeichnet, dass** der polygonale Querschnitt des Formungsabschnittes mindestens 3 bis 5 Ecken aufweist.

13. Gewindeformer (10) nach einem der vorstehenden Ansprüche, **dadurch gekennzeichnet, dass** die Differenz zwischen dem kleinsten Radius und dem größten Radius des polygonalen Querschnitts zwischen dem 0,5 fachen und dem Zweifachen der Steghöhe in einem Eckbereich des polygonalen Querschnitts liegt.

14. Gewindeformer (10) nach einem der vorstehenden Ansprüche, **dadurch gekennzeichnet, dass** die maximale Differenz der Radien des Stegscheitels entlang eines 360° umfassenden Stegabschnittes kleiner ist als die Profiltiefe in den Eckbereichen des polygonale Querschnitts.

15. Gewindeformer (10) nach einem der vorstehenden Ansprüche, **dadurch gekennzeichnet, dass** der Gewindeformer mindestens eine innere, ganz oder überwiegend axial verlaufende Kühlmittelbohrung aufweist, die in mindestens einer Austrittsöffnung entweder axial an der vorderen Stirnseite des Gewindeformers oder radial im Bereich der Formungsstege, insbesondere in der Nähe des vorderen Endes des Formungsabschnittes mündet, in letzterem Fall vorzugsweise in mindestens eine der Unterbrechungen mündet.

## Claims

1. Thread former (10) having a shaft (1) and a forming section (2) which has a polygonal cross-section, wherein a ridge (3) or several ridges (3) of the thread former extend along the periphery of the forming section (2) such that the forming section (2) comprises at least two axially adjacent ridges (3) or ridge sections (3a), respectively, each of which comprising at least one recess (4), **characterized in that** at least a part of said recesses (4) provided on axially adjacent ridge sections (3a) are arranged offset with respect to each other at different angular positions such that any coolant and/or lubricant supplied via said shaft and said recesses is forced to flow through said recesses and along groove sections between said forming ridges along a zigzag path to an axially next following recess.

2. Thread former (10) according to claim 1, **characterized in that** said ridge (3) or said ridge sections (3a) including said recesses (4) are extending at least three times and preferably more than four times around 360 degrees.

3. Thread former (10) according to one of the preceding claims, **characterized in that** on each of said ridge sections (3a) extending about 360 degrees along the circumferential direction, said recesses are provided at a close angular distance adjacent at least one corner (6) of said polygonal cross section.

4. Thread former (10) according to one of the preceding claims, **characterized in that** the angular positions of recesses (4) are arranged at an angular distance of less than 40 degrees, preferably less than 25 degrees from the corner portions of the polygonal cross section.

5. Thread former (10) according to any of the preceding claims, **characterized in that** a helically extending ridge (3) or several helically extending ridges are provided on said forming section.

6. Thread former (10) according to any of the preceding claims, **characterized in that** several annular ridges (3, 3a) are provided on said forming section (2) at uniform axial distances.

7. Thread former (10) according to any of the preceding claims, **characterized in that** the bottom of said recesses (4) is provided on a radius of said forming section (2) corresponding to the radius of a ridge (3) at a position in the middle between adjacent corners (6) of said polygonal cross section.

8. Thread former (10) according to any of the preceding claims, **characterized in that** said recesses (4), when seen along a radial direction towards the forming section (2) are approximately circular.

9. Thread former (10) according to any of the preceding claims, **characterized in that** the maximum diameter of said recesses (4) is between about one half and twice the axial distance of axially adjacent ridge sections (3a).

10. Thread former (10) according to any of the preceding claims, **characterized in that** the recesses (4) when seen along the axial direction are provided on the same angular position on each second or each third ridge.

11. Thread former (10) according to any of the preceding claims, **characterized in that** said recesses (4), when seen along the axial direction, are provided on each n'th ridge at the same angular position, wherein n is the number of corners of said polygonal cross section.

12. Thread former (10) according to any of the preceding claims, **characterized in that** said polygonal cross section of said forming section comprised at least three to five corners.

13. Thread former (10) according to any of the preceding claims, **characterized in that** the difference between the smallest radius and the largest radius of said polygonal cross section is between 0.5 times and 2 times of the ridge height at the corner portion of said polygonal cross section.

14. Thread former (10) according to any of the preceding claims, **characterized in that** the maximum difference between radii of said ridge crest occurring along a ridge section (3a) of 360 degrees is smaller than the depth of the profile in the corner portions of said polygonal cross section.

15. Thread former (10) according to any of the preceding claims, **characterized in that** said thread former comprises at least one inner conduit extending completely or predominantly axially, which conduit opens out in at least one exit opening either axially at the front end of the thread former or radially at the portion of the forming ridges, in particular close to the front end of the forming section, and in the latter case preferably in at least one of said recesses.

## Revendications

1. Taraud (10) comprenant un fût (1) et une zone de formage (2) munie d'une section transversale polygonale, une nervure (3), ou plusieurs nervures (3) dudit taraud s'étendant le long du pourtour de la zone de formage (2) de façon telle que ladite zone de formage (2) soit pourvue, respectivement, d'au moins deux nervures (3) ou régions nervurées axialement voisines qui présentent, à chaque fois, au moins une discontinuité (4),
**caractérisé par le fait qu'**au moins une partie des discontinuités (4) est agencée avec décalage sur des régions nervurées axialement voisines, en des emplacements angulaires différents, de telle sorte que, lorsqu'un agent de refroidissement et de lubrification est délivré par l'intermédiaire du fût et des discontinuités, ledit agent de refroidissement et de lubrification doive obligatoirement circuler le long d'un trajet en zigzag, à travers les discontinuités et le long de régions rainurées, entre les nervures de formage, jusqu'à une discontinuité immédiatement successive dans le sens axial.

2. Taraud (10) selon la revendication 1, **caractérisé par le fait que** la nervure (3) ou les régions nervurées s'étend(ent) en totalité, y compris les discontinuités (4), sur plus de 3 fois, de préférence sur plus de 4 fois 360°.

3. Taraud (10) selon l'une des revendications précédentes, **caractérisé par le fait que** les discontinuités sont prévues, sur chaque région nervurée couvrant une étendue de 360° dans la direction périphérique, avec espacement angulaire étroit à côté d'au moins un coin (6) de la section transversale polygonale.

4. Taraud (10) selon l'une des revendications précédentes, **caractérisé par le fait que** les emplacements angulaires de discontinuités (4) se trouvent à un espacement angulaire inférieur à 40°, de préférence inférieur à 25° vis-à-vis des régions des coins de la section transversale polygonale.

5. Taraud (10) selon l'une des revendications précédentes, **caractérisé par le fait qu'**une nervure (3) décrivant un tracé hélicoïdal, ou plusieurs nervures parallèles décrivant des tracés hélicoïdaux, est (sont) prévue(s) sur la zone de formage.

6. Taraud (10) selon l'une des revendications précédentes, **caractérisé par le fait que** plusieurs nervures (3), configurées en des anneaux circulaires, sont prévues avec espacements axiaux uniformes sur la zone de formage (2).

7. Taraud (10) selon l'une des revendications précédentes, **caractérisé par le fait que** le fond des discontinuités (4) se trouve sur un rayon de la zone de formage (2) qui correspond au rayon d'une nervure (3), au centre entre des coins voisins (6) de la section transversale polygonale.

8. Taraud (10) selon l'une des revendications précédentes, **caractérisé par le fait que** les discontinuités (4) sont approximativement circulaires lorsque la zone de formage (2) est observée en plan dans le sens radial.

9. Taraud (10) selon l'une des revendications précédentes, **caractérisé par le fait que** le diamètre maximal d'une discontinuité (4) se situe entre environ la moitié et le double de l'espacement axial de régions nervurées axialement voisines.

10. Taraud (10) selon l'une des revendications précédentes, **caractérisé par le fait que** les discontinuités (4) occupent, observées dans le sens axial, le même emplacement angulaire à raison d'une nervure sur deux ou sur trois.

11. Taraud (10) selon l'une des revendications précédentes, **caractérisé par le fait que** les discontinuités (4) occupent, observées dans le sens axial, le même emplacement angulaire sur chaque nième nervure, n étant le nombre des coins de la section transversale polygonale.

12. Taraud (10) selon l'une des revendications précédentes, **caractérisé par le fait que** la section transversale polygonale de la zone de formage compte au moins de 3 à 5 coins.

13. Taraud (10) selon l'une des revendications précédentes, **caractérisé par le fait que** la différence, entre le rayon minimal et le rayon maximal de la section transversale polygonale, se situe entre 0,5 fois et le double de la hauteur des nervures dans une région d'un coin de la section transversale polygonale.

14. Taraud (10) selon l'une des revendications précédentes, **caractérisé par le fait que** la différence maximale entre les rayons du sommet des nervures est inférieure, le long d'une région nervurée couvrant 360°, à la profondeur du profilage dans les régions des coins de la section transversale polygonale.

15. Taraud (10) selon l'une des revendications précédentes, **caractérisé par le fait que** ledit taraud est doté d'au moins un alésage intérieur à agent de refroidissement, qui s'étend intégralement ou majoritairement dans le sens axial et qui débouche dans au moins un orifice de sortie, soit axialement, au niveau de la face extrême antérieure dudit taraud, soit radialement, dans la région des nervures de formage et notamment à proximité de l'extrémité antérieure de la zone de formage, et débouche de préférence, dans ce dernier cas, dans au moins l'une des discontinuités.
